(19) Europäisches Patentamt

European Patent Office

Office européen des brevets

(11) EP 0 771 064 B1

(12) EUROPÄISCHE PATENTSCHRIFT

(45) Veröffentlichungstag und Bekanntmachung des Hinweises auf die Patenterteilung:
15.11.2000 Patentblatt 2000/46

(51) Int Cl.⁷: **H02M 7/155**

(21) Anmeldenummer: 96810647.6

(22) Anmeldetag: 30.09.1996

(54) **Summenlöschkreis für einen Thyristor-Stromrichter**

Single shared turn-off circuit for a thyristor converter

Circuit d'extinction centralisé pour un convertisseur à thyristor

(84) Benannte Vertragsstaaten:
**AT CH DE FR GB IT LI SE**

(30) Priorität: **25.10.1995 DE 19539573**

(43) Veröffentlichungstag der Anmeldung:
**02.05.1997 Patentblatt 1997/18**

(73) Patentinhaber: **ABB Industrie AG**
**5400 Baden (CH)**

(72) Erfinder:
• **Dähler, Peter**
**5236 Remigen (CH)**
• **Gaupp, Osvin**
**5400 Baden (CH)**
• **Linhofer, Gerhard O.**
**5405 Dättwil (CH)**
• **Tschudi, Christoph**
**5417 Untersiggenthal (CH)**

(74) Vertreter: **ABB Patent Attorneys**
**c/o ABB Business Services Ltd. (SLE-I)**
**Haselstrasse 16/699**
**5401 Baden (CH)**

(56) Entgegenhaltungen:
**EP-A- 0 134 496        EP-A- 0 489 947**
**DE-A- 3 304 207        DE-A- 3 934 400**
**DE-U- 9 216 662        US-A- 4 580 205**

## Beschreibung

### Technisches Gebiet

Die Erfindung bezieht sich auf das Gebiet der Leistungselektronik. Sie geht aus von einem Summenlöschkreis für einen Thyristor-Stromrichter gemäss dem Oberbegriff des ersten Anspruchs.

### Stand der Technik

Ein solcher Löschkreis wird bereits im Artikel "Moderne Leistungshalbleiter in der Stromrichtertechnik", etz Bd. 114 (1993) Heft 21, Seiten 1310-1319, beschrieben.

Löschkreise werden benötigt, um die Thyristoren eines Stromrichters zu löschen. Ein Löschkreis wird z.B. auch für Thyristor-Stromrichter benötigt, welche sowohl im Wechselrichter- als auch im Gleichrichterbetrieb arbeiten können und die gleichstromseitig an einen SpannungsZwischenkreis angeschlossen sind, wobei die Spannung des Zwischenkreises beispielsweise von einer Batterie, einem selbstgeführten U-Umrichter oder einer anderen geeigneten Quelle gespeist wird. Ein solcher Thyristor-Stromrichter kann Teil einer Wechselspannungsumrichter-Anordnung sein, bei welcher ein erster Stromrichter an ein erstes, vorzugsweise mehrphasiges Spannungsversorgungsnetz (z.B. 50 Hz) angeschlossen ist, und ein zweiter Stromrichter mit einem zweiten Spannungsversorgungsnetz (z.B. 16.67 Hz) verbunden ist, wobei die ersten und zweiten Stromrichter über den Zwischenkreis miteinander gekoppelt sind. Für höchste Leistungen, wie sie z.B. für statische Bahnnetzkupplungen oder Hochspannungsgleichstromübertragung benötigt werden, werden für den ersten Stromrichter mit Vorteil immer noch Thyristoren eingesetzt. Der Löschkreis dieses ersten Stromrichters erhält bei einer solchen Schaltung eine wichtige Schutzfunktion: Falls nämlich im Wechselrichterbetrieb des Thyristor-Stromrichters ein Kommutierungsfehler auftritt, so kann der Strom weder durch den ersten Thyristor-Stromrichter noch durch den zweiten, z.B. bahnseitigen GTO-Stromrichter begrenzt werden. Für diesen Fehlerfall wird ein Schutzsystem benötigt, welches alle stromführenden Thyristoren des ersten Stromrichter schnell und sicher löscht und so vor Überlastung schützt.

Im Fachbuch "Leistungselektronik", herausgegeben von Rudolf Lappe, Springer-Verlag 1988, werden auf den Seiten 284-297 verschiedene Varianten von Löschkreisen angegeben. Die aufwendigste, dafür flexibelste Variante ist die der Einzellöschung. Hier ist für jeden Brückenzweig eine eigene Löschvorrichtung vorgesehen. Diese Variante ist für eine Bahnnetzkupplung jedoch zu teuer und aufwendig. Die Löschung bei der nächsten Variante, der sog. Phasenfolgelöschung beruht darauf, dass der Strom vom jeweils stromführenden Thyristor durch Zünden des zeitlich nachfolgenden Thyristors in der nächsten Phase derselben Brückenhälfte abkommutiert wird. Ein vollständiges Abtrennen vom Netz ist mit einer derartigen Schaltung nicht möglich. Als nächstes wird noch die Phasenlöschung beschrieben. Bei dieser Variante wird der Löschkreis aus einem Reihenschwingkreis aus Löschkondensator und Kommutierungsdrossel gebildet. Diese Schaltung ist für das zu lösende Problem jedoch auch nicht geeignet, da die Haupthyristoren eines Brückenstrangs abwechselnd gelöscht werden. Schliesslich werden noch Schaltungen zur Zentral- oder Summenlöschung beschrieben. Diese Varianten vermögen zwar alle Brükkenzweige mittels eines einzigen zentralen Löschkondensators zu löschen, wären aber für die geforderte Aufgabenstellung zu aufwendig, da der Löschkondensator, um die in den Transformator- und allfälligen Glättungsdrosselinduktivitäten gespeicherte Energie aufzunehmen, ohne dass Überspannungen entstehen, derart überdimensioniert werden müsste, dass die gesamte Schaltungsanordnung nicht mehr wirtschaftlich wäre.

In der EP-A-0 134 496 ist ein Gleichrichter mit integriertem Überspannungsbegrenzer offenbart, welcher Löschzweige aufweist, die parallel zu Leistungsthyristoren geschaltet sind und aus einer Reihenschaltung eines Löschkondensators, einer Löschdrossel und eines Löschthyristors bestehen. Dabei kann ein Löschthyristor an einem Transformator angeschlossen sein.

### Darstellung der Erfindung

Aufgabe der vorliegenden Erfindung ist es deshalb, einen Summenlöschkreis für einen Thyristor-Stromrichter anzugeben, welcher auf wirtschaftliche Art und Weise alle stromführenden Thyristoren genügend schnell und zuverlässig löscht, ohne dass die in den Transformator- und allfälligen Glättungsinduktivitäten gespeicherte Energie unzulässige Überspannungen an den Thyristoren und dem Löschkondensator bewirken.

Diese Aufgabe wird bei einem Summenlöschkreis der eingangs genannten Art durch die Merkmale des ersten Anspruchs gelöst.

Ein solcher Summenlöschkreis für einen mit Thyristoren bestückten Brückenstromrichter, welcher einerseits über einen Transformator an ein Wechselspannungsnetz und andererseits an einen Gleichspannungszwischenkreis angeschlossen ist, umfasst mindestens zwei Löschthyristoren und einen Löschkondensator, wobei mindestens ein Löschthyristor an den Transformator angeschlossen ist und der Löschkondensator über mindestens einen Freilaufzweig zur Verhinderung einer Überladung des Löschkondensators mit einem der Pole des Gleichspannungszwischenkreises verbunden ist.

Kern der Erfindung ist es also, dass die Löschthyristoren nicht an die Gleichspannungsanschlüsse des Zwischenkreises angeschlossen sind, sondern direkt an den Transformator. Ausserdem ist der Summenlöschkreis so ausgelegt, dass beim Löschvorgang selbsttätig ein Freilauf für einen durch die Induktivitäten der Schaltung fliessenden Strom entsteht.

Besonders bevorzugt wird eine Schaltungsvariante, bei welcher ein Überladen des Löschkondensators zuverlässig vermieden werden kann. Dies wird dadurch erreicht, dass die Spannung am Löschkondensator im wesentlichen auf dem Wert der Zwischenkreisspannung festgehalten wird. Ein weiterer Vorteil des erfindungsgemässen Aufbaus besteht darin, dass der Löschkondensator durch den Spannungszwischenkreis automatisch mit der für die Löschung richtigen Polarität vorgeladen wird. Dadurch wird der Summenlöschkreis nach einen Löschvorgang selbsttätig wieder löschbereit gemacht.

Die Schaltung kann sowohl für 12-Puls-Schaltungen als auch mit kleinen Anpassungen für 6-Puls-Schaltungen eingesetzt werden. Weitere Ausführungsbeispiele ergeben sich aus den entsprechenden abhängigen Ansprüchen.

## Kurze Beschreibung der Zeichnungen

Nachfolgend wird die Erfindung anhand von Ausführungsbeispielen im Zusammenhang mit den Zeichnungen näher erläutert.

Es zeigen:

**Fig. 1** Ein Blockschema einer Schaltungsanordnung mit einem Thyristorstromumrichter, welcher an einen Gleichspannungzwischenkreis angeschlossen ist;

**Fig. 2** Ein Ersatzschaltbild eines erfindungsgemässen Summenlöschkreises, welcher für einen 12-Puls-Stromrichter geeignet ist.

**Fig. 3** Ein Ersatzschaltbild eines erfindungsgemässen Summenlöschkreises, welcher für einen 6-Puls-Stromrichter geeignet ist;

Die in den Zeichnungen verwendeten Bezugszeichen und deren Bedeutung sind in der Bezeichnungsliste zusammengefasst aufgelistet. Grundsätzlich sind in den Figuren gleiche Teile mit gleichen Bezugszeichen versehen.

## Wege zur Ausführung der Erfindung

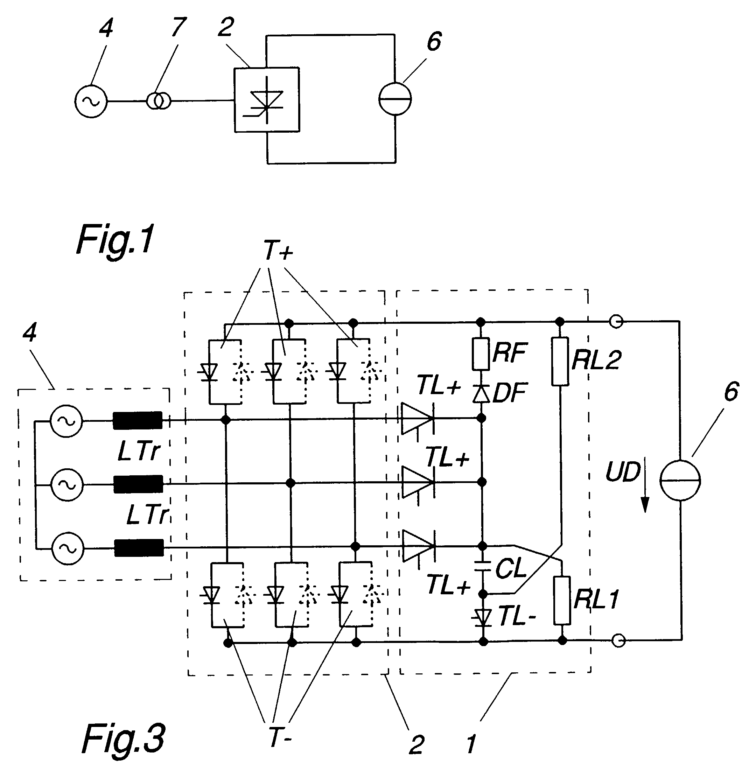

Figur 1 zeigt das Blockschaltbild einer Schaltungsanordnung mit einem Thyristor-Stromumrichter 2, welcher an einen Gleichspannungszwischenkreis 6 angeschlossen ist. Der Gleichspannungszwischenkreis 6 kann beispielsweise durch eine Batterie oder durch selbstgeführten U-Umrichter oder durch einen andere geeignete Spannungsquelle gebildet werden.

Der erfindungsgemässe Summenlöschkreis wurde bei einer Schaltungsanordnung mit einem selbstgeführten U-Umrichter realisiert und wird im folgenden anhand des Beispiels einer Bahnnetzkupplung erläutert. Die Erfindung ist aber nicht auf diesen Schaltungstyp beschränkt.

Mit 4 ist ein erstes Wechselspannungsnetz, z.B. das 50 Hz Landesnetz, bezeichnet. An dieses Wechselspannungsnetz 4 ist ein erster Stromrichter 2 angeschlossen. Dieser ist über einen Gleichspannungszwischenkreis 6 mit einem zweiten, der Übersichtlichkeit halber nicht dargestellten Stromrichter verbunden. An den zweiten Stromrichter ist ein zweites Wechselspannungsnetz, z.B. ein 16 2/3 Hz Bahnnetz angeschlossen. Aufgabe der Bahnnetzkupplung ist es, Energie entweder vom ersten Netz 4 ins zweite Netz abzugeben oder umgekehrt. Aus wirtschaftlichen Gründen wird für den ersten Stromrichter 2 immer noch eine mit konventionellen Thyristoren bestückte Schaltung eingesetzt. Tritt im Wechselrichterbetrieb des ersten Stromrichters 2 ein Kommutierungsfehler auf, so kann der Strom weder durch den Thyristorstromrichter 2 noch durch den bahnseitigen zweiten Stromrichter, im allgemeinen ein GTO-Umrichter, begrenzt werden. Als einziges abschaltfähiges Gerät verbleibt der bahnseitig vorgesehene Leistungsschalter. Während der Schaltzeit des Leistungsschalters (1 bis 2 Periode des zweiten Netzes = 60 bis 120 ms) speist aber das zweite Netz über die Dioden des zweiten, mit GTOs bestückten Stromrichters auf den Thyristorstromrichter 2 ein. Diese enorme Belastung überleben die Thyristoren des Stromrichters aber nicht unbeschadet. Deshalb muss ein Summenlöschkreis vorgesehen werden, welcher die Thyristoren des ersten Stromrichters 2 schnell und sicher zu löschen vermag und ohne spezielle Vorkehrungen selbsttätig löschbereit ist. Da jedoch die in den Induktivitäten des Stromkreises, vor allem in den Stromrichter-Transformatorinduktivitäten und allfälligen Glättungsdrosselinduktivitäten, gespeicherte Energie zu Überspannungen im Löschkondensator und an den Thyristoren führen kann, müsste dieser bei den bekannten Lösungen derart überdimensioniert werden, dass die Schaltung viel zu teuer würde. Deshalb ist ein spezieller Summenlöschkreis notwendig, welcher diese Anforderungen auf wirtschaftliche Art und Weise erfüllt:

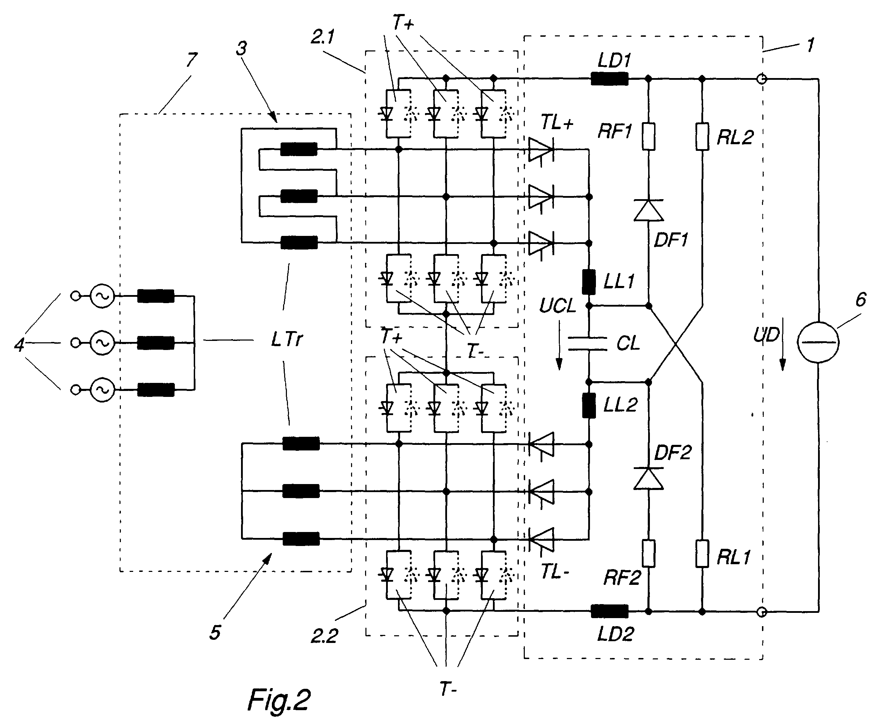

Figur 2 zeigt die Ersatzschaltung eines derartigen Summenlöschkreises 1, welcher für einen 12-Puls-Thyristor-Stromrichter geeignet ist: Es ist ein Spannungsversorgungsnetz 4 vorgesehen, welches über einen Transformator 7 mit zwei Wicklungsgruppen 3 und 5 mit dem Thyristor-Stromrichter verbunden ist. Die erste Wicklungsgruppe 3 ist in Dreieck geschaltet, die zweite 5 in Stern. An jede Wicklungsgruppe ist ein Thyristor-Stromrichter 2.1 bzw. 2.2 angeschlossen. Diese sind mit antiparallel geschalteten Thyristoren $T_+$ und $T_-$ bestückt. Für den hier betrachteten Wechselrichter-Betrieb des Thyristor-Stromrichters leiten nur die ausgezogen dargestellten Thyristoren Strom. Die übrigen, im Gleichrichter-Betrieb aktiven Thyristoren sind gestrichelt dargestellt. Bei der nachfolgenden Beschreibung werden ohne anders lautende ausdrückliche Erwähnung immer die ausgezogenen Thyristoren betrachtet. Die Teilstromrichter 2.1 und 2.2 sind einerseits miteinander und andererseits mit dem Plus- bzw. Minuspol eines Gleichspannungszwischenkreises 6, dargestellt durch eine Spannungsquelle, verbunden

Im folgenden werden die Thyristoren $T_-$ der in Figur 3 unteren Kommutierungsgruppen des Teilstromrichters 2.1 und die Thyristoren $T_+$ der oberen Kommutierungsgruppen des Teilstromrichters 2.2 als "innere" Thyristoren bezeichnet. Die Thyristoren $T_+$ bzw. $T_-$ der mit den Gleichspannungszwischenkreisanschlüssen verbundenen Kommutierungsgruppen der Teilstromrichter 2.1 bzw. 2.2 werden als "äussere" Thyristoren bezeichnet.

Der Löschkreis 1 umfasst als Hauptbestandteile für jede Phase des Netzes bzw. für jeden Brückenzweig der Thyristor-Stromrichter 2.1 und 2.2 einen Löschthyristor $T_{L+}$ oder $T_{L-}$. Diese dienen als Schalter, um die in einem Löschkondensator $C_L$ gespeicherte Energie umzuladen und so die Thyristoren $T_+$ oder $T_-$ der Stromrichter 2.1 und 2.2 zu löschen.

Die Schaltungsanordnung weist folgende Merkmale auf: Die Löschthyristoren $T_{L+}$ des mit der in Dreieck geschalteten Wicklungsgruppe 3 verbundenen Teilstromrichters 2.1 sind mit ihren Anoden an die Phasenanschlüsse des Stromrichters angeschlossen. Die Kathoden bilden einen ersten gemeinsamen Knotenpunkt. Beim zweiten Teilstromrichter 2.2 sind Kathode und Anode der Löschthyristoren $T_{L-}$ vertauscht, und die Anoden der Löschthyristoren bilden einen zweiten gemeinsamen Knotenpunkt. Zwischen den gemeinsamen Knotenpunkten ist der erwähnte Löschkondensator $C_L$ angeordnet. Zwischen dem ersten und dem zweiten gemeinsamen Knotenpunkt und den Anschlüssen des Löschkondensators $C_L$ ist ausserdem je eine Löschinduktivität $L_{L1}$ und $L_{L2}$ eingefügt. Der gemeinsame Anschlusspunkt der mit dem ersten gemeinsamen Knotenpunkt verbundenen Löschinduktivität $L_{L1}$ und des Löschkondensators $C_L$ ist nun einerseits über eine Serieschaltung einer ersten Freilaufdiode $D_{F1}$ und eines ersten Freilaufwiderstandes $R_{F1}$ mit dem Pluspol des Gleichspannungszwischenkreises 6 und andererseits über einen ersten Rückladewiderstand $R_{L1}$ mit dem Minuspol des Gleichspannungszwischenkreises 6 verbunden. Der gemeinsame Anschlusspunkt der mit dem zweiten gemeinsamen Knotenpunkt verbundenen Löschinduktivität $L_{L2}$ und des Löschkondensators $C_L$ ist hingegen einerseits über eine Serieschaltung einer zweiten Freilaufdiode $D_{F2}$ und eines zweiten Freilaufwiderstandes $R_{F2}$ mit dem Minuspol des Gleichspannungszwischenkreises 6 verbunden und andererseits über einen zweiten Rückladewiderstand $R_{L2}$ mit dem Pluspol des Gleichspannungszwischenkreises 6. Zwischen den Zwischenkreisanschlüssen der Stromrichter 2.1 und 2.2 können noch Glättungsinduktivitäten $L_{D1}$ und $L_{D2}$ vorgesehen werden.

Die Schaltung funktioniert wie folgt:

Im normalen Wechselrichter-Betrieb des Stromrichters wird der Löschkondensator $C_L$ über die Rückladewiderstände $R_{L1}$ und $R_{L2}$ auf die negative Zwischenkreisspannung ($-U_D$) aufgeladen. Die Löschthyristoren $T_{L+/-}$ und die Freilaufdioden $D_{F1}$, $D_{F2}$ sperren. Wird im Wechselrichterbetrieb ein Kommutierungsfehler erfasst - beispielsweise durch eine Wechselrichter-Kipperfassung - so sendet die Leittechnik einen kurzen Zündbefehl von typischerweise 200 μs an alle sechs Löschthyristoren $T_{L+}$ und $T_{L-}$. Gleichzeitig werden sowohl die Thyristor-Stromrichter 2.1 und 2.2 als auch der dem Gleichspannungszwischenkreis nachgeschaltete GTO-Stromrichter blockiert. Dadurch wird sichergestellt, dass keine neuen Kommutierungen mehr eingeleitet werden können.

Durch das Zünden aller Löschthyristoren kommutiert der Strom sehr schnell aus den "inneren" Thyristoren $T_-$ bzw. $T_+$ der Stromrichter 2.1 und 2.2 in den Strompfad $T_{L+}$ - $L_{L1}$ - $C_L$ - $L_{L2}$ - $T_{L-}$ des Löschkreises. Der Löschkreis ist, abgesehen von den Induktivitäten $L_{L1}$ und $L_{L2}$, induktivitätsarm, so dass der Kommutierungsvorgang vergleichsweise rasch erfolgt. Die Induktivitäten $L_{L1}$ und $L_{L2}$ begrenzen dabei den Stromanstieg in den Löschthyristoren und dienen zum Einstellen der Stromsteilheit auf das zulässige Mass $dI_{TL}/dt = U_{Dmax}/(L_{L1}+L_{L2})$. Die Spannung am Löschkondensator $C_L$ beträgt, abgesehen von einer kleinen Entladung, immer noch ($-U_D$) Dieser Vorgang wird primärer Löschvorgang genannt.

Die Zeit $t_{L1}$, bis zu welcher der Strom in den Thyristoren der Stromrichter 2.1 und 2.2 Null erreicht, kann wie folgt bestimmt werden:

$$t_{L1} \approx \sqrt{(L_{L1} + L_{L2})C_L} \cdot a\sin\left(\frac{I_L}{U_{CL}} \cdot \sqrt{\frac{L_L}{C_L}}\right)$$

Diesem Vorgang schliesst sich der sogenannte sekundäre Löschvorgang an, bei welchem die noch stromführenden, "äusseren" und die Löschthyristoren ebenfalls gelöscht werden müssen. Aufgrund der in den Induktivitäten, insbesondere den Transformatorinduktivitäten $L_{Tr}$ und den Glättungsdrosselinduktivitäten $L_{D1}$, $L_{D2}$ gespeicherten Energie und des treibenden Zwischenkreises steigt der Strom durch den Löschkondensator an. Als Folge des weiterhin ansteigenden Stroms schwingt die Spannung am Löschkondensator $U_{CL}$ um. Sobald der Wert der Zwischenkreisspannung erreicht wird, werden die Freilaufzweige $D_{F1}$, $R_{F1}$ bzw. $D_{F2}$, $R_{F2}$ selbsttätig aktiv und verhindern eine Überladung des Löschkondensators. Dabei dienen die Freilaufzweige auch zur Aufnahme von Energie, welche insbesondere in der Transformatorinduktivität und in allfälligen weiteren Induktivitäten gespeichert ist. Das Mass der Kondensatorüberladung wird durch die Dimensionierung der Freilaufwiderstände $R_{F1}$, $R_{F2}$ kontrolliert. Der verbleibende Strom fliesst nun einerseits durch die äusseren Thyristoren $T_+$ des Teilstromrichters 2.1, durch die Löschthyristoren $T_{L+}$, $L_{L1}$ und den ersten Freilaufzweig ($D_{F1}$, $R_{F1}$) und andererseits durch die äusseren Thyristoren $T_-$ des Teilstromrichters 2.2, durch die Löschthyristoren $T_{L-}$, $L_{L2}$ und den zweiten Freilaufzweig ($D_{F2}$, $R_{F2}$). Ein kleiner Teil des Stromes fliesst durch $C_L$.

Nach Aktivierung der Freilaufzweige klingt der Strom durch den Löschkondensator exponentiell ab. Diesem Strom wird durch das Netz eine 50 Hz Oszillation überlagert. Dank dieser Oszillation erfolgt zwangsweise ein Stromnulldurchgang. Aufgrund dieses Stromnulldurchganges löschen alle noch stromführenden Thyristoren (Stromrichter- und Löschthyristoren). Damit ist auch der sekundäre Löschvorgang abgeschlossen.

Im Anschluss an den sekundären Löschvorgang wird automatisch wieder Löschbereitschaft erstellt, indem der Kondensator $C_L$ über die Rückladewiderstände $R_{L1}$ und $R_{L2}$ selbsttätig wieder auf die negative Zwischenkreisspannung (-$U_D$) zurückgeladen wird.

In Figur 3 ist die Ersatzschaltung eines Summenlöschkreises aufgezeigt, welcher für eine Sechspuls-Schaltung verwendet werden kann. Die Funktionsweise ist praktisch dieselbe wie bei der Zwölfpuls. Die Schaltung entspricht im wesentlichen der oberen Hälfte der Zwölfpuls-Schaltung, wobei die drei Löschthyristoren $T_{L-}$ und der untere Freilaufzweig $D_{F2}$, $R_{F2}$ durch einen einzelnen Löschthyristor $T_{L-}$ ersetzt sind. Selbstverständlich kann das Netz 4 auch als Dreieck geschaltet sein.

Die Erfindung wurde zwar anhand einer Bahnnetzkupplung aufgezeigt, sie ist aber nicht auf derartige Schaltungen beschränkt, sondern kann ganz allgemein für praktisch jede Art von Thyristor-Stromrichtern, welche an ein Gleichspannungszwischenkreis abgeschlossen sind, eingesetzt werden.

**Bezeichnungsliste**

| | |
|---|---|
| 1 | Summenlöschkreis |
| 2 | erster Stromrichter |
| 2.1, 2.2 | Teilstromrichter des ersten Stromrichters |
| 3 | erste Wicklungsgruppe |
| 4 | Wechselspannungsnetz |
| 5 | zweite Wicklungsgruppe |
| 6 | Gleichspannungszwischenkreis |
| 7 | Transformator |
| $T_{L+}$, $T_{L-}$ | Löschthyristoren |
| $T_+$, $T_-$ | Stromrichterthyristoren |
| $D_F$, $D_{F1}$, $D_{F2}$ | Freilaufdioden |
| $R_F$, $R_{F1}$, $R_{F2}$ | Freilaufwiderstände |
| $C_L$ | Löschkondensator |
| $R_{L1}$, $R_{L2}$ | Löschinduktivitäten |
| $L_{L1}$, $L_{L2}$ | Rückladewiderstände |
| $L_{D1}$, $L_{D2}$ | Glättungsdrosseln |
| $L_{Tr}$ | Transformatorinduktivität |
| $U_D$ | Zwischenkreisspannung |
| $U_{CL}$ | Spannung am Löschkondensator |

**Patentansprüche**

1. Summenlöschkreis (1) für einen mit Thyristoren ($T_+$, $T_-$) bestückten Brückenstromrichter (2; 2.1, 2.2), welcher einerseits über einen Transformator (7) an ein Wechselspannungsnetz (4) und andererseits an einen Gleichspannungszwischenkreis (6) angeschlossen ist, wobei der Summenlöschkreis mindestens zwei Löschthyristoren ($T_{L+}$, $T_{L-}$) und einen Löschkondensator ($C_L$) umfasst, dadurch gekennzeichnet, dass mindestens ein Löschthyristor an den Transformator (7) angeschlossen ist und dass der Löschkondensator ($C_L$) über mindestens einen Freilaufzweig ($R_F$, $D_F$; $R_{F1}$, $R_{F2}$, $D_{F1}$, $D_{F2}$) zur Verhinderung einer Überladung des Löschkondensators ($C_L$) mit einem der Pole des Gleichspannungszwischenkreises (6) verbunden ist.

2. Summenlöschkreis nach Anspruch 1, dadurch gekennzeichnet, dass der Freilaufzweig eine Serieschaltung eines Freilaufwiderstandes ($R_F$; $R_{F1}$, $R_{F2}$) und einer Freilaufdiode ($D_F$; $D_{F1}$, $D_{F2}$) umfasst.

3. Summenlöschkreis nach Anspruch 1 oder 2, dadurch gekennzeichnet, dass das Netz (4) mehrphasig ist und dass für jede Phase ein Löschthyristor ($T_{L+}$) vorgesehen ist.

4. Summenlöschkreis nach Anspruch 2 und 3, dadurch gekennzeichnet, dass

   (a) das Netz (4) und der Transformator (7) mehrphasig sind und die Anoden der Löschthyristoren ($T_{L+}$) mit je einer Phase des Transformators verbunden sind;
   (b) die Kathoden der Löschthyristoren ($T_{L+}$) einen gemeinsamen Knotenpunkt bilden, welcher einerseits über die Serieschaltung des Freilaufwiderstandes ($R_F$) und der Freilaufdiode ($D_F$) mit dem Pluspol des Gleichspannungszwischenkreises (6) und andererseits mit dem Löschkondensator ($C_L$) verbunden ist, wobei der Löschkondensator über einen Schalter mit dem Minuspol des Gleichspannungszwischenkreises verbunden ist; und
   (c) der gemeinsame Anschluss des Löschkondensators und des Knotenpunkts der Kathoden der Löschthyristoren über einen ersten Rückladewiderstand ($R_{L1}$) mit dem Minuspol des Gleichspannungszwischenkreises (6) und der gemeinsame Anschluss des Löschkondensators und des Schalters über einen zweiten Rückladewiderstand ($R_{L2}$) mit dem Pluspol des Gleichspannungszwischenkreises verbunden ist.

5. Summenlöschkreis nach Anspruch 2 und 3, dadurch gekennzeichnet, dass

   (a) der erste Stromrichter (2) als Zwölfpuls-Reihenschaltung ausgebildet ist und einen ersten (2.1) und einen zweiten Teilstromrichter (2.2) umfasst;
   (b) der Transformator (7) eine erste in Dreieck geschaltete Wicklungsgruppe (3) und eine zweite in Stern geschaltete Wicklungsgruppe (5) umfasst, wobei der erste Teilstromrichter (2.1) an die erste Wicklungsgruppe und der zweite Teilstromrichter (2.2) an die zweite Wicklungsgruppe angeschlossen ist;
   (c) für jede Phase der ersten bzw. zweiten Wicklungsgruppe ein Löschthyristor ($T_{L+}$ bzw. $T_{L-}$) vorgesehen ist, wobei die Kathoden derjenigen Löschthyristoren ($T_{L+}$), welche mit dem ersten Teilstromrichter (2.1) und mit der in Dreieck geschalteten Wicklungsgruppe verbunden sind, einen ersten gemeinsamen Knotenpunkt bilden, und die Anoden derjenigen Löschthyristoren ($T_{L-}$), welche mit dem zweiten Teilstromrichter und mit der in Stern geschalteten zweiten Wicklungsgruppe verbunden sind, einen zweiten gemeinsamen Knotenpunkt bilden;
   (d) der erste und der zweite gemeinsame Knotenpunkt über den Löschkondensator ($C_L$) miteinander verbunden sind;
   (e) der Löschkondensator ($C_L$) und der erste gemeinsame Knotenpunkt einerseits über die Serieschaltung einer ersten Freilaufdiode ($D_F1$) und eines ersten Freilaufwiderstandes ($R_{F1}$) mit dem Pluspol des Gleichspannungszwischenkreises und andererseits über einen ersten Rückladewiderstand ($R_{L1}$) mit dem Minuspol des Gleichspannungszwischenkreises verbunden ist;
   (f) der Löschkondensator ($C_L$) und der zweite gemeinsame Knotenpunkt einerseits über die Serieschaltung einer zweiten Freilaufdiode ($D_{F2}$) und eines zweiten Freilaufwiderstandes ($R_{F2}$) mit dem Minuspol des Gleichspannungszwischenkreises und andererseits über einen zweiten Rückladewiderstand ($R_{L2}$) mit dem Pluspol des Gleichspannungszwischenkreises verbunden ist.

6. Summenlöschkreis nach Anspruch 5, dadurch gekennzeichnet, dass zwischen dem ersten bzw. zweiten gemeinsamen Knotenpunkt und dem Löschkondensator je eine Löschinduktivität ($L_{L1}$, $L_{L2}$) vorgesehen ist.

7. Summenlöschkreis nach Anspruch 4 oder 6, dadurch gekennzeichnet, dass der Stromrichter (2) bzw. der erste und der zweite Teilstromrichter (2.1, 2.2) je über eine Glättungsdrossel ($L_{D1}$, $L_{D2}$) mit dem Gleichspannungszwischenkreis (6) verbunden sind.

8. Wechselstromumrichter mit einem mit Thyristoren bestückten, ersten Stromrichter (2) und einem mit abschaltbaren Leistungshalbleiterschaltern bestückten, zweiten Stromrichter, wobei der erste Stromrichter über einen Transformator (7) an ein erstes Wechselspannungsnetz (4) und der zweite Stromrichter an ein zweites Wechselspannungsnetz angeschlossen ist und wobei zwischen dem ersten Stromrichter (2) und dem zweiten Stromrichter ein Gleichspannungszwischenkreis (6) vorgesehen ist, dadurch gekennzeichnet, dass für den ersten Stromrichter (2) ein Summenlöschkreis (1) nach einem der vorstehenden Ansprüche vorgesehen ist.

## Claims

1. Common turn-off circuit (1) for a bridge power converter (2; 2.1, 2.2) which is equipped with thyristors ($T_+$, $T_-$) and is connected, on the one hand, to an AC voltage grid (4) via a transformer (7) and, on the other hand, to a DC voltage intermediate circuit (6), the common turn-off circuit comprising at least two turn-off thyristors ($T_{L+}$, $T_{L-}$), and a turn-off capacitor ($C_L$), characterized in that at least one turn-off thyristor is connected to the transformer (7), and in that the turn-off capacitor ($C_L$) is connected to one of the poles of the DC voltage intermediate circuit (6) via at least one freewheeling path ($R_F$, $D_F$; $R_{F1}$, $R_{F2}$, $D_{F1}$, $D_{F2}$) for the purpose of preventing overcharging of the turn-off capacitor ($C_L$).

2. Common turn-off circuit according to Claim 1, characterized in that the freewheeling path comprises a series circuit formed by a freewheeling resistor ($R_F$; $R_{F1}$, $R_{F2}$) and a freewheeling diode ($D_F$; $D_{F1}$, $D_{F2}$).

3. Common turn-off circuit according to Claim 1 or 2, characterized in that the grid (4) is polyphase, and in that a turn-off thyristor ($T_{L+}$) is provided for each phase.

4. Common turn-off circuit according to Claims 2 and 3, characterized in that

   (a) the grid (4) and the transformer (7) are polyphase and the anodes of the turn-off thyristors ($T_{L+}$) are connected to a respective phase of the transformer;
   (b) the cathodes of the turn-off thyristors ($T_{L+}$) form a common node which is connected, on the one hand, to the positive pole of the DC voltage intermediate circuit (6) via the series circuit formed by the freewheeling resistor ($R_F$) and the freewheeling diode ($D_F$) and, on the other hand, to the turn-off capacitor ($C_L$), the turn-off capacitor being connected to the negative pole of the DC voltage intermediate circuit via a switch; and
   (c) the common connection between the turn-off capacitor and the node of the cathodes of the turn-off thyristors is connected to the negative pole of the DC voltage intermediate circuit (6) via a first charge reversal resistor ($R_{L1}$), and the common connection between the turn-off capacitor and the switch is connected to the positive pole of the DC voltage intermediate circuit via a second charge reversal resistor ($R_{L2}$).

5. Common turn-off circuit according to Claims 2 and 3, characterized in that

   (a) the first power converter (2) is designed as a twelve-pulse series circuit and comprises a first (2.1) and a second power converter element (2.2);
   (b) the transformer (7) comprises a first, delta-connected winding group (3) and a second, star-connected winding group (5), the first power converter element (2.1) being connected to the first winding group and the second power converter element (2.2) being connected to the second winding group;
   (c) a turn-off thyristor ($T_{L+}$ and $T_{L-}$) is provided for each phase of the first and of the second winding group, respectively, the cathodes of those turn-off thyristors ($T_{L+}$) which are connected to the first power converter element (2.1) and to the delta-connected winding group forming a first common node, and the anodes of those turn-off thyristors ($T_{L-}$) which are connected to the second power converter element and to the star-connected second winding group forming a second common node;
   (d) the first and the second common node are connected to one another via the turn-off capacitor ($C_L$);
   (e) the turn-off capacitor ($C_L$) and the first common node are connected, on the one hand, to the positive pole of the DC voltage intermediate circuit via the series circuit formed by a first freewheeling diode ($D_{F1}$) and a first freewheeling resistor ($R_{F1}$) and, on the other hand, to the negative pole of the DC voltage intermediate circuit via a first charge reversal resistor ($R_{L1}$);
   (f) the turn-off capacitor ($C_L$) and the second common node are connected, on the one hand, to the negative pole of the DC voltage intermediate circuit via the series circuit formed by a second freewheeling diode ($D_{F2}$)

and a second freewheeling resistor ($R_{F2}$) and, on the other hand, to the positive pole of the DC voltage intermediate circuit via a second charge reversal resistor ($R_{L2}$).

6. Common turn-off circuit according to Claim 5, characterized in that a respective turn-off inductor ($L_{L1}$, $L_{L2}$) is provided between the first and second common node and the turn-off capacitor.

7. Common turn-off circuit according to Claim 4 or 6, characterized in that the power converter (2) or rather the first and the second power converter elements (2.1, 2.2) are connected to the DC voltage intermediate circuit (6) via a respective smoothing inductor ($L_{D1}$, $L_{D2}$).

8. AC converter having a first power converter (2) equipped with thyristors and having a second power converter equipped with gate turn-off power semiconductor switches, the first power converter being connected via a transformer (7) to a first AC voltage grid (4) and the second power converter being connected to a second AC voltage grid, and a DC voltage intermediate circuit (6) being provided between the first power converter (2) and the second power converter, characterized in that a common turn-off circuit (1) according to one of the preceding claims is provided for the first power converter (2).

**Revendications**

1. Circuit d'extinction centralisé (1) pour un convertisseur en pont (2 ; 2.1, 2.2) équipé de thyristors ($T_+$, $T_-$) qui est raccordé d'un côté à un réseau de tension alternative (4) par le biais d'un transformateur (7) et de l'autre côté à un circuit intermédiaire à tension continue (6), le circuit d'extinction centralisé comprenant au moins deux thyristors d'extinction ($T_{L+}$, $T_{L-}$) et un condensateur d'extinction ($C_L$), caractérisé par le fait qu'au moins un thyristor d'extinction est raccordé au transformateur (7) et que le condensateur d'extinction ($C_L$) est relié à l'une des bornes du circuit intermédiaire à tension continue (6) par le biais d'au moins une branche de roue libre ($R_F$, $D_F$, $R_{F1}$, $R_{F2}$, $D_{F1}$, $D_{F2}$) pour empêcher une surcharge du condensateur d'extinction ($C_L$).

2. Circuit d'extinction centralisé selon la revendication 1, caractérisé par le fait que la branche de roue libre comprend un circuit série composé d'une résistance de roue libre ($R_F$ ; $R_{F1}$, $R_{F2}$) et d'une diode de roue libre ($D_F$ ; $D_{F1}$, $D_{F2}$).

3. Circuit d'extinction centralisé selon la revendication 1 ou 2, caractérisé par le fait que le réseau (4) comporte plusieurs phases et qu'un thyristor d'extinction ($T_{L+}$) est prévu pour chaque phase.

4. Circuit d'extinction centralisé selon les revendications 2 et 3, caractérisé par le fait que

(a) le réseau (4) et le transformateur (7) comportent plusieurs phases et les anodes des thyristors d'extinction ($T_{L+}$) sont chacune reliées à une phase du transformateur ;
(b) les cathodes des thyristors d'extinction ($T_{L+}$) forment un point commun de jonction qui est relié d'un côté à la borne positive du circuit intermédiaire à tension continue (6) par le biais du circuit série composé de la résistance de roue libre ($R_F$) et de la diode de roue libre ($D_F$) et d'un autre côté au condensateur d'extinction ($C_L$), le condensateur d'extinction étant relié à la borne négative du circuit intermédiaire à tension continue par le biais d'un commutateur ; et
(c) la borne commune du condensateur d'extinction et du point de jonction des cathodes des thyristors d'extinction est reliée à la borne négative du circuit intermédiaire à tension continue (6) par le biais d'une première résistance de recharge ($R_{L1}$) et la borne commune du condensateur d'extinction et du commutateur est reliée à la borne positive du circuit intermédiaire à tension continue (6) par le biais d'une deuxième résistance de recharge ($R_{L2}$).

5. Circuit d'extinction centralisé selon les revendications 2 et 3, caractérisé par le fait que

(a) le premier convertisseur (2) est réalisé sous la forme d'un circuit série à douze impulsions et comprend un premier (2.1) et un deuxième (2.2) convertisseur partiel ;
(b) le transformateur (7) comprend un premier groupe d'enroulements (3) branchés en triangle et un deuxième groupe d'enroulements (5) branchés en étoile, le premier convertisseur partiel (2.1) étant raccordé au premier groupe d'enroulements et le deuxième convertisseur partiel (2.2) au deuxième groupe d'enroulements ;
(c) un thyristor d'extinction ($T_{L+}$ ou $T_{L-}$) est prévu pour chaque phase du premier ou du deuxième groupe d'enroulements, les cathodes des thyristors d'extinction ($T_{L+}$) qui sont reliés au premier convertisseur partiel (2.1) et au groupe d'enroulements branchés en triangle formant un premier point commun de jonction et les anodes des thyristors d'extinction ($T_L$-) qui sont reliés au deuxième convertisseur partiel et au groupe d'enroulements branchés en étoile formant un deuxième point commun de jonction ;

(d) le premier et le deuxième point commun de jonction sont reliés ensemble par le biais d'un condensateur d'extinction ($C_L$) ;

(e) le condensateur d'extinction ($C_L$) et le premier point commun de jonction sont reliés d'un côté à la borne positive du circuit intermédiaire à tension continue par le biais du circuit série composé d'une première diode de roue libre ($D_{F1}$) et d'une première résistance de roue libre ($R_{F1}$) et de l'autre côté à la borne négative du circuit intermédiaire à tension continue par le biais d'une première résistance de recharge ($R_{L1}$) ;

(f) le condensateur d'extinction ($C_L$) et le deuxième point commun de jonction sont reliés d'un côté à la borne négative du circuit intermédiaire à tension continue par le biais du circuit série composé d'une deuxième diode de roue libre ($D_{F2}$) et d'une deuxième résistance de roue libre ($R_{F2}$) et de l'autre côté à la borne positive du circuit intermédiaire à tension continue par le biais d'une deuxième résistance de recharge ($R_{L2}$).

6. Circuit d'extinction centralisé selon la revendication 5, caractérisé par le fait qu'une inductance d'extinction ($L_{L1}$, $L_{L2}$) est à chaque fois prévue entre le premier ou le deuxième point commun de jonction et le condensateur d'extinction.

7. Circuit d'extinction centralisé selon la revendication 4 ou 6, caractérisé par le fait que le convertisseur (2) ou le premier et le deuxième convertisseur partiel (2.1, 2.2) sont chacun reliés au circuit intermédiaire à tension continue (6) par le biais d'une bobine de lissage ($L_{D1}$, $L_{D2}$).

8. Onduleur muni d'un premier convertisseur (2) équipé de thyristors et d'un deuxième convertisseur équipé de commutateurs à semiconducteur commutables, le premier convertisseur étant relié à un premier réseau de tension alternative (4) par le biais d'un transformateur (7) et le deuxième convertisseur à un deuxième réseau de tension alternative, et un circuit intermédiaire à tension continue étant prévu entre le premier convertisseur (2) et le deuxième convertisseur, caractérisé par le fait qu'un circuit d'extinction centralisé (1) selon l'une des revendications précédentes est prévu pour le premier convertisseur (2).

**Fig.1**

**Fig.3**

Fig.2